# EUROPEAN PATENT APPLICATION

(11) **EP 1 182 873 A2**
(43) Date of publication of application: **27.02.2002**
(21) Application number: 01118642.6
(22) Date of filing: 02.08.2001
(51) Int. Cl.: H04N 7/14, H04N 7/173

(54) **Audio/video data transfer system, audio/video data transfer method, and audio/video server**

(30) Priority: 15.08.2000 JP 2000246248
(71) Applicant: SONY CORPORATION, Tokyo (JP)
(72) Inventor: Ishiai, Katsuhiro, Shinagawa-ku, Tokyo (JP)
(74) Representative: Melzer, Wolfgang, Dipl.-Ing.

(57) **Abstract**

The invention relates to an audio/video data transfer system, an audio/video data transfer method, and an audio/video server for enabling audio/video data to be easily transferred between the audio/video servers. Video servers 1 and 3 connected by the Internet are constructed as FTP servers. When AV data is transferred from the server 1 to the server 3, a computer apparatus 2 for controlling the server 1 communicates with a computer apparatus 4 for controlling the server 3 and discriminates whether the server 3 can receive the transferred AV data or not. If it can be received, the computer 2 sends a command "PASV" to the server 1 and allows an IP address of an empty communication port of the server 1 to be notified. The IP address is transmitted to the computer 4. On the basis of the IP address, a command "PORT" is sent to the server 3 and a communication port of the server 3 is set. The AV data reproduced by the server 1 under control of the computer 2 is transmitted from the IP address notified by "PASV". The AV data is received by the server 3 on the basis of the setting of the communication port in the "PORT".

## Description

### BACKGROUND OF THE INVENTION

### Field of the Invention

The invention relates to an audio/video data transfer system, an audio/video data transfer method, and an audio/video server for enabling audio/video data to be easily transferred between the audio/video servers.

### Description of the Related Arts

Nowadays, a video server for storing a large amount of video data into a recording medium of a large capacity, searching the stored video data in response to a request, and transferring it to the outside is being spread. As a recording medium of the video data, in addition to a conventional video tape and a conventional changer apparatus which can enclose many video tapes, in recent years, a hard disk drive or the like is frequently being used. The video data read out from the video server is subjected to, for example, an editing process and used for broadcasting, distribution, or the like. The video data is transferred from the video server to, for example, another video server provided at a remote place and stored into this video server.

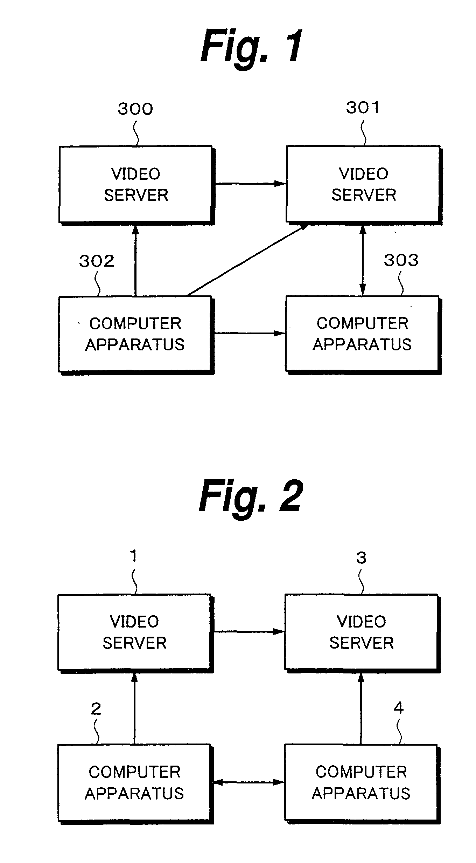

A case of transferring the video data from the video server to another video server will now be considered. Fig. 1 conceptually shows a system according to the prior art. Fig. 1 shows the system for transferring video data from a video server 300 to a video server 301. The video server 300 as a transferring source and the video server 301 as a transfer destination are controlled and monitored by computer apparatuses 302 and 303, respectively. The video servers 300 and 301 are connected by a network such as Ethernet, Internet, or the like.

In the above construction, in case of transferring the video data from the video server 300 to the video server 301, hitherto, the computer apparatus 302 controls the whole transferring process. On the other hand, the computer apparatus 303 controls the video server 301, periodically monitors the video server 301, and discriminates whether the video data transferred from the video server 300 has been received or not.

In the example of Fig. 1, communication is performed between the video servers 300 and 301 by using a TCP/IP (Transmission Control Protocol/Internet Protocol) as a communicating protocol. An FTP (File Transfer Protocol) is used for transferring the video data.

The transferring process which is executed on the basis of a command of the FTP will be schematically explained. First, the computer apparatus 302 is logged in the video server 300. A command "GET" based on the FTP is sent from the computer apparatus 302 to the video server 300. The designated video data is transferred from the video server 300 to the computer apparatus 302 by the command "GET" and once stored into a recording medium of a large capacity built in the computer apparatus 302.

Subsequently, a command "PUT" based on the FTP is sent from the computer apparatus 302 to the video server 301. At the same time, a command for requesting the computer apparatus 303 to control the video server 301 in a predetermined manner is sent from the computer apparatus 302 to the computer apparatus 303. The video data which was transferred from the video server 300 and stored into the computer apparatus 302 is transferred to the video server 301 by the command "PUT".

The computer apparatus 303 periodically monitors the video server 301, thereby checking an increase or decrease of the data in the video server 301, or by receiving a notification of the transfer of the video data from the computer apparatus 302, or the like, the computer apparatus 303 can know the transfer of the video data to the video server 301.

Hitherto, the transfer of the video data from the video server 300 to the video server 301 is executed through the computer apparatus 302 as mentioned above. There is, consequently, a problem such that it takes a surplus transferring time. There is also a problem such that it is necessary that the recording medium of the capacity large enough to store the video data to be transferred is provided for the computer apparatus 302.

When the video data is transferred, it is necessary that two IP addresses of an IP address of the video server 301 as a transfer destination and an IP address of the computer apparatus 303 for controlling the operation of the video server 301 are designated on the computer apparatus 302. Therefore, there is a problem such that the operation in the computer apparatus 302 becomes complicated.

### OBJECTS AND SUMMARY OF THE INVENTION

It is, therefore, an object of the invention to provide an audio/video data transfer system, an audio/video data transfer method, and an audio/video server for enabling audio/video data to be easily transferred between the audio/video servers.

According to the first aspect of the invention, to solve the above-mentioned problem, there is provided an audio/video data transfer system comprising:
a first audio/video server;
a second audio/video server to which audio/video data is transferred from the first audio/video server;
first control means for controlling the first audio/video server;
second control means for controlling the second audio/video server and being capable of mutually communicating with the first control means; and
communicating means for transferring the audio/video data between the first and second audio/video servers,
wherein upon transfer of the audio/video data by the communicating means,
the first control means notifies the first audio/video server of a communication port by which the first audio/video server can transfer the audio/video data through the communicating means and
notifies the second control means of the notified communication port, and
the second control means sets the communication port notified from the first control means into the second audio/video server and
directly transfers the audio/video data from the first audio/video server to the second audio/video server by using the set communication port.

According to the second aspect of the invention, there is provided an audio/video data transfer method comprising:
a first control step of controlling a first audio/video server;
a second control step of controlling a second audio/video server to which audio/video data is transferred from the first audio/video server and being capable of mutually communicating with the first control step; and
a communicating step of transferring the audio/video data between the first and second audio/ video servers,
wherein upon transfer of the audio/video data by the communicating step,
the first control step notifies the first audio/video server of a communication port by which the first audio/video server can transfer the audio/video data through the communicating step and
notifies the second control step of the notified communication port, and
the second control step sets the communication port notified from the first control step into the second audio/video server and
directly transfers the audio/video data from the first audio/video server to the second audio/video server by using the set communication port.

According to the third aspect of the invention, there is provided an audio/video server comprising:
communicating means capable of transferring audio/video data to an outside and receiving the audio/ video data transferred from the outside in accordance with a predetermined communicating protocol;
encoding means for encoding the audio/video data by a predetermined system;
decoding means for decoding the audio/video data encoded by the predetermined system;
storing means for storing the audio/video data;
control means for monitoring installing states of the communicating means, the encoding means, and the decoding means upon transfer of the audio/video data and controlling the transfer of the audio/video data on the basis of the installing states.

The above and other objects and features of the present invention will become apparent from the following detailed description and the appended claims with reference to the accompanying drawings.

### BRIEF DESCRIPTION OF THE DRAWINGS

Fig. 1 is a schematic diagram conceptually showing a system according to the prior art;
Fig. 2 is a schematic diagram conceptually showing a system according to the invention;
Fig. 3 is a block diagram showing a construction of an example of a video server;
Fig. 4 is a schematic diagram showing a GUI of an example of setting an address on a network of a video server on a transfer destination side;
Fig. 5 is a schematic diagram showing a GUI of an example of setting an address on a network of a computer apparatus for controlling the video server on the transfer destination side;
Fig. 6 is a schematic diagram showing a GUI of an example of managing a network address of the computer apparatus for controlling the video server on the transfer destination side;
Fig. 7 is a schematic diagram showing a GUI of an example of setting a transfer of AV data between the video servers;
Figs. 8A to 8C are sequence charts showing a communicating sequence of an example in an embodiment; and
Fig. 9 is a schematic diagram showing a data structure of an example which is transmitted and received between the computer apparatuses.

### DETAILED DESCRIPTION OF THE PREFERRED EMBODIMENT

An embodiment of the invention will now be described hereinbelow with reference to the drawings . Fig. 2 conceptually shows a video data transfer system according to the invention. A video server 1 which can store a number of video data is controlled by a computer apparatus 2. Similarly, a video server 3 which is located at a place far from the video server 1 and can store a number of video data is controlled by a computer apparatus 4.

The computer apparatuses 2 and 4 are connected by a communication network and can communicate with each other. Similarly, the video servers 1 and 3 are connected by a communication network and can communicate with each other. The video servers 1 and 3 can transmit and receive the video data through the communication network.

In the embodiment, the communication networks

In the embodiment, the communication networks which connect the video server 1, computer apparatus 2, video server 3, and computer apparatus 4, respectively, use the TCP/IP (Transmission Control Protocol/Internet Protocol) as a communicating protocol and can use the FTP (File Transfer Protocol). For example, the video servers 1 and 3 are connected by the Internet and the computer apparatuses 2 and 4 are connected by the Internet, respectively.

In the embodiment, the video servers 1 and 3 are constructed as FTP servers, respectively. Therefore, for example, the computer apparatus 2 can access to the video server 1 by logging in the video server 1 on the basis of a connecting procedure defined in the FTP. This point is the same also in case of the video server 3 and computer apparatus 4.

Each of the computer apparatuses 2 and 4 has a general construction as a computer apparatus. For example, a CPU (Central Processing Unit), a memory, a hard disk drive, a graphics controller, an input device, a communication interface, and the like are connected to a bus. A monitor device is connected to the graphics controller. By a control of the CPU based on a predetermined program, various processes such as display to the monitor device, communication by the communication interface, and the like are controlled. A construction of each of the video servers 1 and 3 will be explained hereinlater.

In the above construction, the computer apparatuses 2 and 4 communicate with each other, thereby controlling the transfer of the video data between the video servers 1 and 3. For example, the video server 1 is logged in from the computer apparatus 2 and the computer apparatus 2 generates a transfer request to the video server 1 so as to transfer the video data stored in the video server 1 to the video server 3. At the same time, the computer apparatus 2 notifies the computer apparatus 4 of a message that the video data is transferred from the video server 1 to the video server 3. On the basis of this notification, the computer apparatus 4 sets the video server 3 so that it can receive the transferred video data.

In the embodiment, at the time of the transfer request and the reception setting, commands "PASV" and "PORT" defined in the FTP are used. By the commands "PASV" and "PORT", a communication path is established between the video servers 1 and 3 and the video data can be directly transferred from the video server 1 to the video server 3.

As mentioned above, according to the invention, since the video data to be transferred is not temporarily stored into the hard disk drive or the like of the computer apparatus 2, the video data can be transferred without a surplus troublesomeness. Since no communication is performed between the computer apparatus connected to the video server on the transferring source side and the video server on the transfer destination side, costs which are necessary for communication can be reduced.

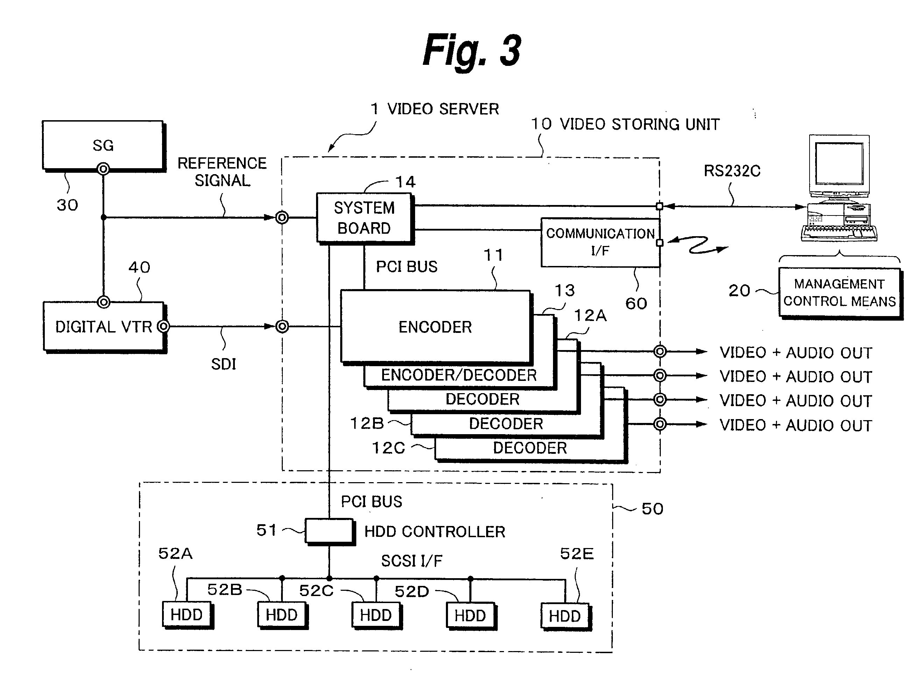

Fig. 3 shows a construction of an example of the video server 1. In this example, the video server 1 comprises: a video storing unit 10 for performing the whole control and encoding and decoding the video data; and a storing unit 50 for storing the video data. A signal generator (SG) 30 supplies a common reference signal to an external digital VTR 40 and the video server 1 (video storing unit 10). In the digital VTR 40, the video data and audio data (hereinafter, collectively referred to as AV data) reproduced on the basis of the reference signal are outputted in a format of an SDI (Serial Data Interface) and supplied to the video storing unit 10 of the video server 1.

A plurality of encoding and decoding means can be installed into the video storing unit 10. In the example of Fig. 3, an encoder 11, an encoder/decoder 13, and decoders 12A to 12C for executing an encoding process, a decoding process, or the like of the AV data by using the MPEG2 (Moving Pictures Experts Group 2) system are installed in the video storing unit 10. The encoder 11, encoder/decoder 13, and decoders 12A to 12C are connected to a system board 14 for controlling the whole video server 1 by using, for example, a PCI (Peripheral Component Interconnect) bus as an interface. The encoder 11, encoder/decoder 13, and decoders 12A to 12C executes the encoding process or the decoding process of the AV data while communicating with the system board 14 through the PCI bus.

According to such a system, in the video storing unit 10, by cascade connecting boards having the encoding/decoding functions such as encoder 11, encoder/decoder 13, decoders 12A to 12C, and the like, the number of corresponding channels can be increased to, for example, up to 20 channels. A communication control is performed between the video storing unit 10 and the computer apparatus 2 and the computer apparatus 2 is also notified of information of installing states of the encoder 11, encoder/decoder 13, and decoders 12A to 12C and the like through the system board 14. As mentioned above, the video server 1 (and video server 3) which is used in the embodiment is a system in which the encoders and decoders can be properly installed and can record and transmit a plurality of images.

A compression encoding system of the AV data is not limited to the MPEG2 but can also use another system. The AV data can be also handled without being compression encoded.

The storing unit 50 has a recording medium of a large capacity and stores the AV data supplied from the outside as it is or stores the AV data which was encoded or decoded into predetermined data by the encoder 11, encoder/decoder 13, and decoders 12A to 12C. The stored AV data can be freely read out by the control of the system board 14 based on an instruction of the computer apparatus 2.

For example, a hard disk drive can be used as a recording medium of the large capacity in the storing unit 50. In the example of Fig. 3, a hard disk array comprising five hard disk drives 52A to 52E is used as a recording medium of the large capacity for storing the AV data. The five hard disk drives 52A to 52E are controlled so as to operate in association with each other by a hard disk controller 51. The hard disk controller 51 is connected to the system board 14 by the PCI bus.

The system board 14 is connected to the computer apparatus 2 by using, for example, RS-232C as an interface. The computer apparatus 2 and video server 1 mutually communicate by using the RS-232C and can perform a control of the video server 1 by the computer apparatus 2, a notification of a status from the video server 1 to the computer apparatus 2, and the like. In this communication, the FTP can be used.

Further, the video storing unit 10 has a communication I/F unit 60 which can be connected to a predetermined network such as Ethernet. The video server 1 and computer apparatus 2 mutually communicate through the communication I/F unit 60 and can perform the control of the video server 1 by the computer apparatus 2, the notification of the status from the video server 1 to the computer apparatus 2, and the like. In this communication by the communication I/F unit 60, the FTP can be used.

The communication interface can communicate with corresponding another video server such as the fore going video server 3 or the like by the communication I/F unit 60. For example, on the basis of an instruction supplied from the computer apparatus 2 through the communication I/F unit 60, the AV data is read out from the storing unit 50 under the control of the system board 14, and the read-out AV data is supplied to the communication I/F unit 60 through the system board 14. The communication I/F unit 60 performs a predetermined communication control and sends the supplied AV data to the outside. Similarly, it is also possible to control the system so as to receive the AV data transmitted from the outside by the communication I/F unit 60 and store it into the storing unit 50.

The computer apparatus 2 has therein management control means 20 as software for performing the management and control of the video server 1. In order to simultaneously control a plurality of channels, the management control means 20 has an OS (Operating System) function which can execute a multiple process (for example, multithread) to a plurality of applications (for example, threads).

Since each of the video server 3 and computer apparatus 4 has a construction similar to that of each of the video server 1 and computer apparatus 2, its detailed description is omitted here.

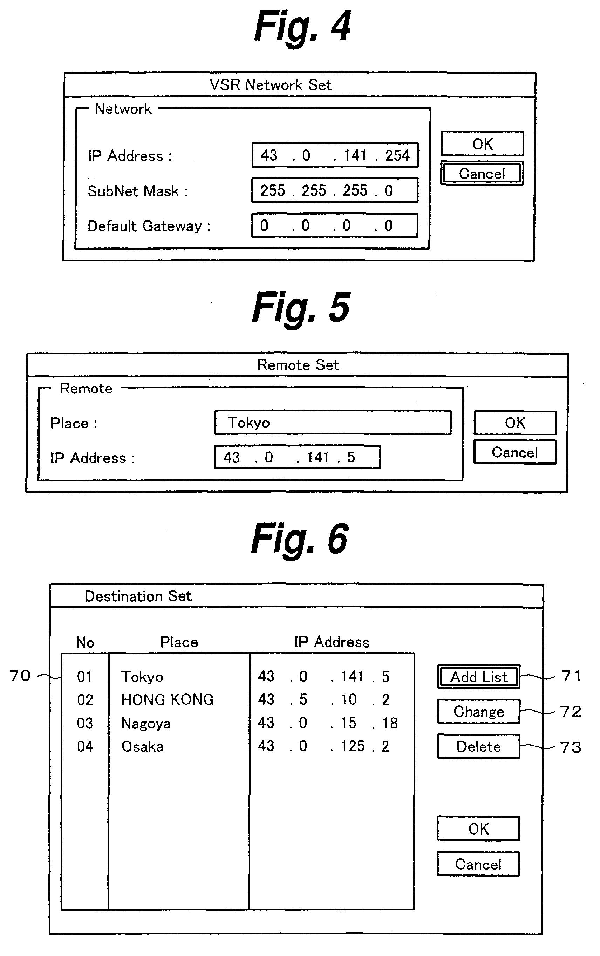

The operation on the computer apparatus 2 on the transferring source side in order to transfer the video data according to the invention will now be described with reference to Figs. 4 to 7. A series of operations is executed by a GUI (Graphical User Interface) based on a display screen by the computer apparatus 2. Fig. 4 shows the GUI of an example of setting an address on the network of the video server 3 on the transfer destination side. In the computer apparatus 2, on the basis of the address on the network of the video server 3, each of items "IP Address", "SubNet Mask", and "Default Gateway" is set. By pressing an "OK" button, the set contents are held in the computer apparatus 2 and decided. By pressing a "Cancel" button, a setting window is finished without holding the set contents.

Fig. 5 shows the GUI of an example of setting an address on the network of the computer apparatus 4 for controlling the video server 3 on the transfer destination side. In the computer apparatus 2, "IP Address" is set on the basis of the address on the network of the computer apparatus 4. The name of the transfer destination can be properly inputted to "Place". By pressing the "OK" button, the set contents are held in the computer apparatus 2 and determined. By pressing the "Cancel" button, the setting window is finished without holding the set contents.

Fig. 6 shows the GUI of an example of managing a network address of the computer apparatus 4 for controlling the video server 3 on the transfer destination side. The contents which have already been set in the computer apparatus 2 are displayed as a list onto a display unit 70. By pressing an "Add List" button 71, the foregoing GUI shown in Fig. 4 is displayed and an address can be newly added into the list. By pressing a "Change" button 72 in a state where one of information displayed in the list has been selected, the foregoing GUI of Fig. 3 is displayed in a state where the selected address information has been displayed. The address information which has already been set can be changed. By pressing a "Delete" button 73 in a state where one of the information displayed in the list has been selected, the selected address information can be deleted. By pressing the "OK" button, the set contents are held in the computer apparatus 2 and determined. By pressing the "Cancel" button, the setting window is finished without holding the set contents.

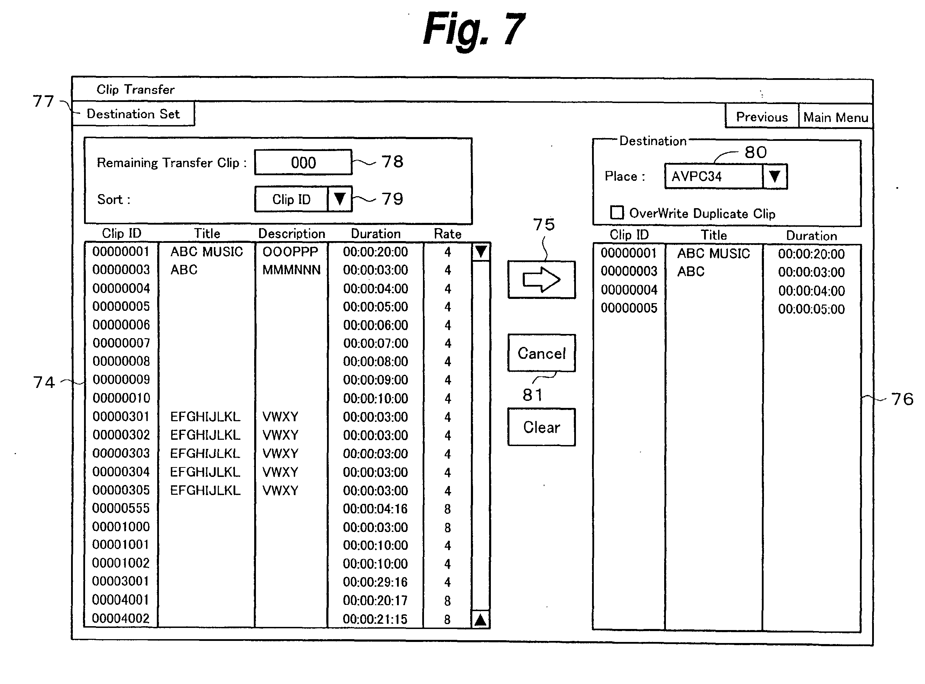

Fig. 7 shows the GUI of an example of setting the transfer of the AV data from the video server 1 to the video server 3. A list of the AV data stored in the video server 1 is displayed on a display unit 74. In the example of Fig. 7, each item of "Clip ID" that is unique to each AV data, "Title" as a title of the AV data, "Description" as a brief explanation of the AV data, "Duration" indicative of a length of AV data, and "Rate" showing a data rate of the AV data is displayed. Each AV data is identified by "Clip ID". Display contents on the display unit 74 can be rearranged in accordance with items which are displayed as a dropdown list onto a display unit 79.

The names of the video servers which can be designated as transfer destinations are displayed as a list onto a dropdown list on a display unit 80. For example, the video server of the transfer destination can be selected from the video servers displayed in Fig. 6 mentioned above and set. By pressing a "Destination Set" button 77, the foregoing GUI of Fig. 6 is displayed and the registration contents of the video server can be edited. By checking "Overwrite Duplicate Clip", in the case where the AV data having the same ID as the Clip ID of the AV data which is transferred is set to the transfer destination, the transferred AV data is overwritten onto such data.

By selecting the data to be transferred from the AV data displayed on the display unit 74 and pressing a button 75, the selected AV data is transferred to the video server of the transfer destination selected by the display unit 80. A plurality of AV data to be transferred can be selected on the display unit 74. The transferred AV data is displayed on a display unit 76. The number of AV data which is not transferred yet although the transfer mode was selected is displayed on a display unit 78. By pressing a "Cancel" button 81 during the transfer of the AV data, the transfer of the AV data can be interrupted.

Although the case where the GUIs shown in Figs. 4 to 7 and the functions corresponding thereto are installed in the video server 1 has been described above, those GUIs and functions can be also similarly installed into the video server 3.

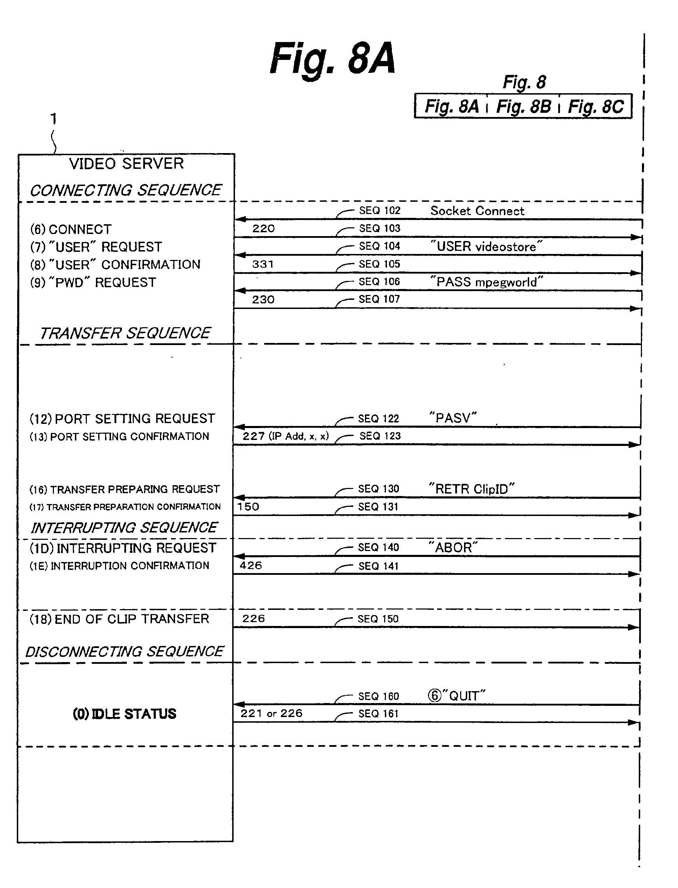

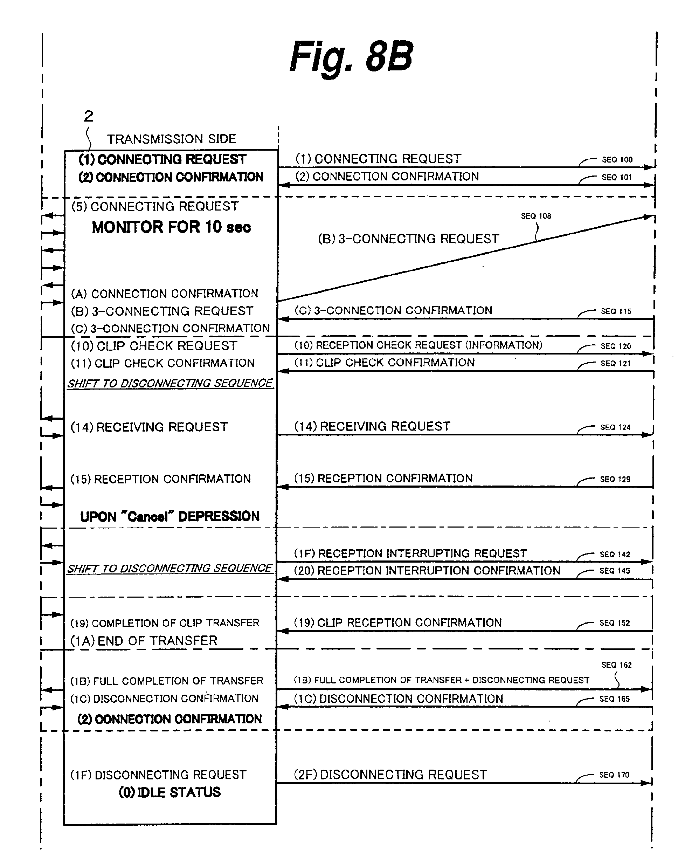

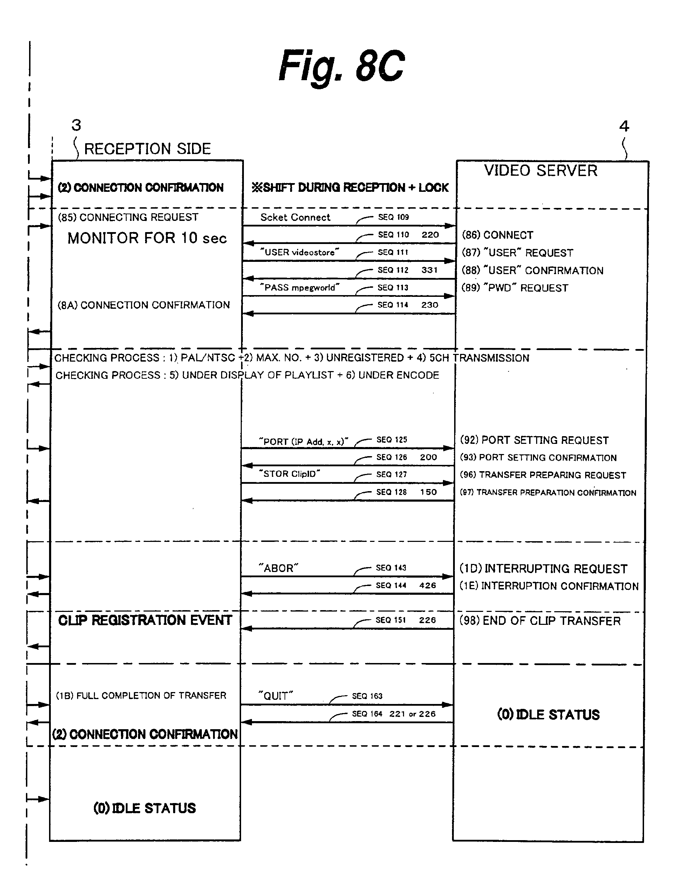

Subsequently, the transferring process of the AV data according to the invention will be described in more detail. Figs. 8A, 8B, and 8C show a communicating sequence of an example according to the embodiment. In the embodiment, communication is performed between the computer apparatuses 2 and 4, between the computer apparatus 2 and video server 1, and between the computer apparatus 4 and video server 3, respectively, thereby realizing the transfer of the AV data from the video server 1 to the video server 3. As will be explained hereinlater, by handling a message as it is as a state management value, the management is made easy.

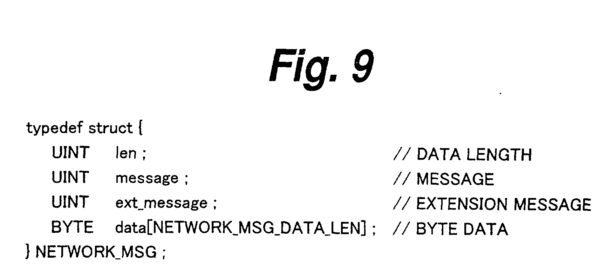

The data is transmitted and received by a data structure as shown in Figs. 8A to 8C between the computer apparatuses 2 and 4. In Fig. 9, "//" denotes that the contents described after the relevant line are a comment and are not used as data. The comment can be omitted. "len" denotes a length of byte which has a length of 32 bits and is transmitted and received in a lump.

"message" has a length of 32 bits, kind data which is transmitted and received between the computer apparatuses is stored into "message", and the state management value is also stored therein. For example, information showing a kind of data to be transferred, that is, information showing whether the data to be transferred is the video data or a file of another kind is stored into upper 16 bits of "message". The state management value is stored into lower 16 bits. For example, the state management value is a value written in ( ) in the communicating sequence diagrams of Figs. 8A to 8C and is a value to control a state transition of each apparatus. For example, a state to be shifted next on the basis of the received state management value is instructed to each apparatus.

"ext_message" has a length of 32 bits and kind data in the case where the length is insufficient when only "message" mentioned above is used or when the state is not shifted is stored.

A line of a comment "BYTE data" is an area for transmitting and receiving information by data of 8 bits.

In Figs. 8A to 8C, the video server 1 of the transferring source, the computer apparatus 2 for controlling the video server 1, the video server 3 of the transfer destination, and the computer apparatus 4 for controlling the video server 3 are shown in order from the left, respectively. In Figs. 8A to 8C, the sequence is separated into a connecting sequence for connecting each apparatus, a transfer sequence for transferring the video data, an interrupting sequence for interrupting the transfer of the video data, and a disconnecting sequence for disconnecting each apparatus and written.

As mentioned above, in the embodiment, the video servers 1 and 3 are handled as FTP servers, respectively. Therefore, the computer apparatus 2 is an FTP client of the video server 1 and the computer apparatus 4 is an FTP client of the video server 3. For example, in order to access to the AV data stored in the video server 1 from the computer apparatus 2, in a manner similar to the general FTP server, it is necessary to log in the video server 1 from the computer apparatus 2. For example, upon log-in, the computer apparatus 2 is promoted from the video server 1 side so as to input predetermined user name and password. The communication between the computer apparatus 2 and video server 1 and the communication between the computer apparatus 4 and video server 3 are executed by using an FTP command specified in RFC (Request For Comments) 959, respectively. In Figs. 8A to 8C, a command shown in " " indicates that it is an FTP command.

First, in first sequences SEQ 100 and SEQ 101, a connecting request is issued from the computer apparatus 2 to the computer apparatus 4 (SEQ 100). A connection confirmation is returned from the computer apparatus 4 to the computer apparatus 2 in response to this request, so that the connection between the computer apparatuses 2 and 4 is established. At this time, the computer apparatuses 2 and 4 are connected on the basis of the IP address set in the GUI shown in Fig. 5 mentioned above.

The connecting sequence will now be described. In sequences SEQ 102 and SEQ 103, the computer apparatus 2 and video server 1 are socket-connected on the basis of the IP address set by the GUI shown in Fig. 4 mentioned above in accordance with a procedure of the TCP/IP. For example, a time-out time of 10 seconds is provided for the socket connection, and whether the socket connection is completed within the time-out time or not is monitored by the computer apparatus 2. Subsequently, a user name is requested from the video server 1 to the computer apparatus 2 in the sequence SEQ 103. A command "USER" and the user name are transmitted from the computer apparatus 2 to the video server 1 in a sequence SEQ 104. Subsequently, a password is requested from the video server 1 to the computer apparatus 2 (SEQ 105). In response to this request, a command "PASS" and the password are transmitted from the computer apparatus 2 to the video server. In the video server 1, if it is determined that a combination of the transmitted user name and password is correct, a notification indicative of such a fact is transmitted to the computer apparatus 2 in a sequence SEQ 107.

When the computer apparatus 2 is logged in the video server 1, the computer apparatus 4 is notified of this fact from the computer apparatus 2 in a sequence SEQ 108. When this notification is received by the computer apparatus 4, the computer apparatus 4 is logged in the video server 3 in sequences SEQ 109 to SEQ 114 in a manner similar to that mentioned above. After completion of the log-in, a connection confirmation message is transmitted from the computer apparatus 4 to the computer apparatus 2 (SEQ 115).

The transfer sequence will now be described. When the computer apparatus 2 receives the connection confirmation from the computer apparatus 4 in the above sequence SEQ 115, the state of the computer apparatus 2 is shifted to a clip check requesting state and a reception check request is transmitted from the computer apparatus 2 to the computer apparatus 4 (SEQ 120). By the reception check request, the information of the AV data which is transferred from the video server 1 to the video server 3 is notified from the computer apparatus 2 to the computer apparatus 4. "Clip" in Figs. 8A to 8C is similar to the AV data (AV file).

The computer apparatus 4 checks the transferred AV data on the basis of the reception check request received by the sequence SEQ 120. For example, the following contents are checked: that is, format information (PAL or NTSC) of the video data in the AV data; the maximum number of AV data to be transferred; information regarding whether the AV data to be transferred is not registered yet into the video server 3 or not; the number of transmission channels of the audio data; information regarding whether a play list has been displayed in the video server 3 or not; information regarding whether the encoding process has been performed in the video server 3 or not; and the like. When the check is completed, a clip check confirmation is transmitted from the computer apparatus 4 to the computer apparatus 2 in a sequence SEQ 121.

If it is determined that in the checking process in the computer apparatus 4 based on the reception check request in the sequence SEQ 120, if it is determined that the AV data to be transferred is improper to be stored in the video server 3 or if it is decided that the video server 3 is not in a state where it can receive the AV data, this fact is notified by the clip check confirmation in the sequence SEQ 121. When the computer apparatus 2 receives this notification, the status is shifted to a disconnecting sequence, which will be explained hereinlater.

In the checking process by the sequence SEQ 120, if it is determined that the AV data to be transferred can be stored into the video server, the command "PASV" is transmitted from the computer apparatus 2 to the video server 1 in a sequence SEQ 122. The command "PASV" is a command for notifying of an empty port on the transmission destination side of the command "PASV". As a response of the command "PASV", an empty IP address (IP Add, x, x) of the video server 1 is returned to the computer apparatus 2 together with No. 227 (SEQ 123). (x, x) of the IP address indicates a predetermined address value.

The empty IP address of the video server 1 returned to the computer apparatus 2 is sent from the computer apparatus 2 to the computer apparatus 4 in a sequence SEQ 124 and a receiving request of the IP address information is issued. By the computer apparatus 4, the command "PORT" is transmitted to the video server 3 in a sequence SEQ 125 on the basis of the supplied empty IP address of the video server 1. By the command "PORT", the empty IP address (IP Add, x, x) of the video server 1 is set as a communication port into the video server 3 and a connection between the video servers 1 and 3 is established on the basis of the IP address (IP Add, x, x).

In a sequence SEQ 126, communication of setting confirmation of the communication port with the video server 1 is performed from the video server 3 to the computer apparatus 4. In a sequence SEQ 127, thus, a command "STOR" and a clip ID to discriminate the AV data to be transferred are transmitted from the computer apparatus 4 to the video server 3, and a transfer preparation of the AV data of the video server 1 is instructed. When the preparation is completed in the video server 3, the computer apparatus 4 is notified of this fact from the video server 3 (SEQ 128). In response to this notification, in a sequence SEQ 129, the computer apparatus 2 is notified of a reception confirmation responsive to the receiving request of the sequence SEQ 124 mentioned above from the computer apparatus 4.

When the reception confirmation is received by the computer apparatus 2, a command "RETR" and the clip ID to identify the AV data to be transferred are transmitted from the computer apparatus 2 to the video server 1 in a sequence SEQ 130, and an instruction to make a transfer preparation of the AV data is generated. When the transfer preparation is finished in the video server 1, the computer apparatus 2 is notified of this fact from the video server 1 (SEQ 131).

After the foregoing series of sequences, the transfer of the AV data from the video server 1 to the video server 3 based on the IP address (IP Add, x, x) sent from the video server 1 in the foregoing sequence SEQ 123 is started. In the data transfer, for example, the computer apparatus 2 instructs the video server 1 so as to reproduce the designated AV data. On the basis of this instruction, the video server 1 reproduces the designated AV data. The reproduced AV data is outputted from the IP address (IP Add, x, x) notified in the foregoing sequences SEQ 122 and SEQ 123. This AV data is received by the video server 3 in which the communication port has been set to the IP address (IP Add, x, x) in the foregoing sequences SEQ 125 and SEQ 126 and stored.

An interrupting sequence will now be described. By pressing the "Cancel" button 81 in the GUI in Fig. 7 mentioned above during the transfer of the AV data according to the transfer sequence, the interrupting sequence is activated. When the "Cancel" button 81 is pressed in the computer apparatus 2, a command "ABOR" is transmitted from the computer apparatus 2 to the video server 1 in a sequence SEQ 140 and an interrupting request of the transfer of the AV data is generated. In response to this request, for example, the reproduction of the AV data is stopped in the video server 1. The output of the AV data from the IP address (IP Add, x, x) is interrupted. In a next sequence SEQ 141, the computer apparatus 2 is notified of an interruption confirmation from the video server 1 on the basis of the interrupting request.

When the notification of the interruption confirmation by the video server 1 in the sequence SEQ 141 is received by the computer apparatus 2, the computer apparatus 2 requests the computer apparatus 4 to interrupt the reception of the AV data by the video server 3 in a next sequence SEQ 142. The computer apparatus 4 which received the interrupting request transmits the command "ABOR" to the video server 3 and issues a request so as to interrupt the communication with the IP address (IP Add, x, x) (SEQ 143). On the basis of the interrupting request, the computer apparatus 4 is notified of an interruption confirmation from the video server 3 (SEQ 144). The computer apparatus 2 is notified of a reception interruption confirmation from the computer apparatus 4 which received the interruption confirmation (SEQ 145). When the reception interruption confirmation is received by the computer apparatus 2, the processing sequence advances to a disconnecting sequence, which will be explained hereinlater.

Processes in case of the video clip, that is, in the case where the transfer of the AV data is finished will now be described. In the video server 1, for example, when the AV data which is being transferred reaches the end of data and the data transfer is finished, the computer apparatus 2 is notified of this fact from the video server 1 (SEQ 150). If it is determined in the video server 3 that, for instance, the transfer of the AV data has been finished, the computer apparatus 4 is notified of this fact from the video server 3 (SEQ 151). When this notification is received by the computer apparatus 4, a notification for confirmation of the reception of the AV data is transmitted from the computer apparatus 4 to the computer apparatus 2 (SEQ 152).

In the computer apparatus 4, when the notification of the sequence SEQ 151 is received, a registering process of the AV data which was transferred and stored in the video server 3 is executed. By the registering process, for example, the items of the AV data which was transferred and stored into the video server 3 are added into the list displayed on the display unit 74 in the foregoing GUI in Fig. 7 by the video server 3.

The disconnecting sequence will now be described. When the transferring process of the AV data from the video server 1 is finished by the foregoing interrupting sequence, the arrival at the end of the data by the normal transferring process, or the like, a command "QUIT" to instruct the video server 1 to disconnect the communication between the computer apparatus 2 and video server 1 is transmitted from the computer apparatus 2 (SEQ 160). The video server 1 which received the command "QUIT" notifies of a disconnection confirmation for confirming the disconnection of the communication between the video server 1 and computer apparatus 2 (SEQ 161). After that, the communication is disconnected.

For example, in parallel with the foregoing sequence SEQ 160, the notification indicative of the completion of the whole transfer of the AV data and a disconnecting request for disconnecting the communication between the computer apparatus 4 and video server 3 are transmitted from the computer apparatus 2 to the computer apparatus 4 in a sequence SEQ 162. When they are received by the computer apparatus 4, the foregoing command "QUIT" is transmitted from the computer apparatus 4 to the video server 3. By the video server 3 which received the command "QUIT" , a disconnection confirmation to confirm the disconnection of the communication between the video server 3 and computer apparatus 4 is notified (SEQ 164). After that, the communication is disconnected. In a sequence SEQ 165, a connection confirmation is transmitted from the computer apparatus 4 to the computer apparatus 2.

When the transfer of the AV data from the video server 1 to the video server 3 is finished and the connection between the computer apparatus 2 and video server 1 and the connection between the computer apparatus 4 and video server 3 are disconnected, respectively, the computer apparatus 2 transmits a disconnecting request to the computer apparatus 4 so as to disconnect the connection between the computer apparatuses 2 and 4 in a sequence SEQ 170.

In the communication which is executed between the computer apparatuses 2 and 4 among the foregoing sequences SEQ 100 to SEQ 170, the state management value is sent from the communicating source to the communication destination. On the basis of the received state management value, the communication destination side can know a process to be executed next, changes the state management value to a predetermined value upon next transmission, and transmits it to the next communication destination.

By transmitting and receiving the data as shown in Figs. 8A to 8C and executing negotiation between the computer apparatuses 2 and 4 prior to transferring the data, whether the AV data can be transferred or not can be known according to the state or the like of the video server 3 on the transfer destination side, so that abnormal processes in the video server can be reduced. By transmitting and receiving the state management values between the computer apparatuses 2 and 4, the interrupting process of the transferring process of the AV data, the retransmitting process of the AV data, and the like can be easily supported.

According to the invention as described above, the video server apparatuses are constructed as FTP servers and the transfer of the AV data between the video servers is controlled by using the commands "PASV" and "PORT" of the FTP commands. Thus, the transfer of the AV data between the video servers is directly controlled and there is no need to temporarily transfer the transferring AV data to a personal computer or the like, so that there is an effect such that the transfer time can be reduced.

There is, consequently, an effect such that the recording medium of a large capacity for temporarily transferring the AV data is unnecessary.

Further, when the AV data is transferred between the video servers, since it is sufficient to merely designate the IP address of the computer apparatus for controlling the video server of the transfer destination, there is an effect such that the operability is improved.

Further, since there is no need to connect the computer apparatus for controlling the video server of the transferring source to the video server of the transfer destination, there is an effect such that the costs for communication can be reduced.

The present invention is not limited to the foregoing embodiment but many modifications and variations are possible within the spirit and scope of the appended claims of the invention.

## Claims

1. An audio/video data transfer system comprising:
a first audio/video server;
a second audio/video server to which audio/video data is transferred from said first audio/video server;
first control means for controlling said first audio/video server;
second control means for controlling said second audio/video server and being capable of mutually communicating with said first control means; and
communicating means for transferring said audio/video data between said first and second audio/video servers,
wherein upon transfer of said audio/video data by said communicating means,
said first control means notifies said first audio/video server of a communication port by which said first audio/video server can transfer said audio/video data through said communicating means and
notifies said second control means of said notified communication port, and
said second control means sets said communication port notified from said first control means into said second audio/video server and
directly transfers said audio/video data from said first audio/video server to said second audio/video server by using said set communication port.

2. A system according to claim 1, wherein each of said first and second audio/video servers installs a file transfer protocol as a communicating protocol, and each of the communication between said first audio/video server and said first control means and the communication between said second audio/video server and said second control means is executed by said file transfer protocol.

3. A system according to claim 1, wherein as a pre-process upon execution of the transfer of said audio/video data, said first control means discriminates whether said second audio/video server is in a state where it can receive said audio/video data to be transferred or not.

4. A system according to claim 3, wherein a format of said audio/video data to be transferred is discriminated.

5. A system according to claim 3, wherein an installing state of said second audio/video server is discriminated.

6. A system according to claim 2, wherein as a pre-process upon execution of the transfer of said audio/video data, said first control means discriminates whether said second audio/video server is in a state where it can receive said audio/video data to be transferred or not.

7. A system according to claim 6, wherein a format of said audio/video data to be transferred is discriminated.

8. A system according to claim 6, wherein as a pre-process upon execution of the transfer of said audio/video data, said first control means discriminates an installing state of said second audio/video server.

9. An audio/video data transfer method comprising:
a first control step of controlling a first audio/video server;
a second control step of controlling a second audio/video server to which audio/video data is transferred from said first audio/video server and being capable of mutually communicating with said first control step; and
a communicating step of transferring said audio/video data between said first and second audio/video servers,
wherein upon transfer of said audio/video data by said communicating step,
said first control step notifies said first audio/video server of a communication port by which said first audio/video server can transfer said audio/video data through said communicating step and
notifies said second control step of said notified communication port, and
said second control step sets said communication port notified from said first control step into said second audio/video server and
directly transfers said audio/video data from said first audio/video server to said second audio/video server by using said set communication port.

10. A method according to claim 9, wherein each of said first and second control steps is executed by a file transfer protocol as a communicating protocol.

11. A method according to claim 9, wherein as a pre-process upon execution of the transfer of said audio/video data, said first control step discriminates whether said second audio/video server is in a state where it can receive said audio/video data to be transferred or not.

12. A method according to claim 11, wherein a format of said audio/video data to be transferred is discriminated.

13. A method according to claim 11, wherein an installing state of said second audio/video server is discriminated.

14. A method according to claim 10, wherein as a pre-process upon execution of the transfer of said audio/video data, said first control step discriminates whether said second audio/video server is in a state where it can receive said audio/video data to be transferred or not.

15. A method according to claim 14, wherein a format of said audio/video data to be transferred is discriminated.

16. A method according to claim 14, wherein as a pre-process upon execution of the transfer of said audio/video data, said first control step discriminates an installing state of said second audio/video server.

17. An audio/video server comprising:
communicating means capable of transferring audio/video data to an outside and receiving the audio/video data transferred from the outside in accordance with a predetermined communicating protocol;
encoding means for encoding said audio/video data by a predetermined system;
decoding means for decoding said audio/video data encoded by said predetermined system;
storing means for storing said audio/video data; and
control means for monitoring installing states of said communicating means, said encoding means, and said decoding means upon transfer of said audio/video data by said communicating means and controlling said transfer of said audio/video data on the basis of said installing states.

18. A server according to claim 17, wherein said communicating protocol is a file transfer protocol.

19. A server according to claim 17, wherein as a pre-process of said transfer, whether said audio/video data to be transferred can be received on a transfer destination of said transfer or not is discriminated.

20. A server according to claim 19, wherein a format of said audio/video data to be transferred is discriminated.

21. A server according to claim 19, wherein said installing state of said transfer destination is discriminated.

22. A server according to claim 18, wherein as a pre-process of said transfer, whether said audio/video data to be transferred can be received on a transfer destination of said transfer or not is discriminated.

23. A server according to claim 22, wherein a format of said audio/video data to be transferred is discriminated.

24. A server according to claim 22, wherein said installing state of said transfer destination is discriminated.
